# EUROPEAN PATENT SPECIFICATION

(11) **EP 1 316 247 B1**
(45) Date of publication and mention of the grant of the patent: **09.12.2009**
(21) Application number: 01965930.9
(22) Date of filing: 15.08.2001
(51) Int. Cl.: H05K 5/00, G01D 11/24

(54) **ELECTRICAL MODULE**
ELEKTRISCHES MODUL
MODULE LECTRIQUE

(30) Priority: 17.08.2000 MY 0003772
(43) Date of publication of application: 04.06.2003
(73) Proprietor: Avago Technologies ECBU IP (Singapore) Pte. Ltd., Singapore 768923 (SG)
(72) Inventor: NG, Kee-Yean, 13600 Penang (MY); FO, Kok-Hing, 09600 Kedah (MY)
(74) Representative: Dilg, Haeusler, Schindelmann Patentanwaltsgesellschaft mbH
(86) International application number: PCT/US2001/025492
(87) International publication number: WO 2002/015655

(56) References cited:
- EP-A2- 0 255 582
- GB-A- 2 127 628
- US-A- 4 318 010
- US-A- 5 204 498
- US-A- 5 753 857
- US-B1- 6 265 659

## Description

The present invention relates to an electrical sensor module, especially an optical encoder module comprising an optical emitter and an optical detector spaced apart from and aligned to each other within a housing.

In an optical encoder module, the emitter and the detector have to be spaced apart from each other and aligned to each other such that, for example, a code card or a code wheel drawn or rotated, respectively, in a gap between the emitter and the detector can be detected and read by the encoder. Light emitted by the emitter is either blocked or passed by the code card or wheel and then detected by the detector. Therefore, it is important that the emitter and the detector are exactly aligned to each other, i.e. the emitter and the detector have to accurately overlap each other.

US Design Patent Des. 329,193 discloses an optical encoder module comprising an optical emitter and an optical detector, the emitter and the detector being each provided with a solid molded housing, wherein both the emitter and detector housings are held together by means of a bracket. The bracket has a locking plate including a locking opening and the optical encoder module (i.e. one of the housings) comprises a locking protrusion which engages with the locking opening of the locking plate. Ribs are formed inside the bracket, and the emitter and detector housings are provided with laterally elongated grooves for receiving the ribs of the bracket.

However, since the emitter and detector housings can be manufactured with certain tolerance values and therefore with some accuracy only, once the respective housings are held together with the bracket, the emitter and the detector can be offset relative to each other resulting in deterioration of the detecting operation. This problem can further be deteriorated by mechanical inaccuracy of the bracket and an inaccurate engagement of the ribs of the bracket with the elongated grooves in the emitter and detector housings.

According to other known arrangements the electrical emitter and detector components are not molded in respective housings, but only provided with a simple encapsulation and are mechanically inserted into separately manufactured housings.

Inserting components inside a housing is a well-known operation in many assembly processes. In many cases, the components need to be fitted tightly and snugly inside the housing such that they maintain their positional orientations vital to the functioning of the completely mounted assembly. However, the dimensions of the components as well as the housings are subject to fabrication tolerances that causes them to have slightly different dimensions. Because of these dimensional variations, matching problems may arise when the components and the housing or housings are mounted into an assembly.

In the assembly process where components are being inserted into respective recesses of a housing, it is important that the tolerances of both the components and the recesses are compatible. For perfect matching, the dimensions of, e.g. the length of the recess should be equal to the dimensions, e.g. the length of the component. However, there are tolerances in both of these dimensions. When the length of the component is at maximum dimension and the length of the recess is at minimum dimension, it may even happen that the component cannot be inserted into the housing. Conversely, when the length of the component is at minimum dimension and the length of the recess is at maximum dimension, the component will be too loose after insertion into the housing.

In order to ensure that all components can be inserted into the housing, the tolerances are typically specified such that the maximum dimension of the component is equal to the minimum dimension of the respective recess in the housing. In this case a mismatch of the component and the housing is prevented.

Furthermore, in order to ensure an accurate positional orientation of the component in the respective housing, generally glue, adhesive, a clip or a plug is used to secure the component in the housing. In other cases, after insertion of the electrical component into the housing, the housing is deformed through heat staking such that the component is jammed tight inside the housing. In other instances, a mechanical catch or latch is used. Yet in other cases, the component is sized such that there is mechanical interference between the component and the corresponding recess during the component insertion process.

Such methods are successfully used in the industry but they suffer from limitations. Glue, adhesive, plugs or clips represent additional materials that naturally incur extra costs. In addition, an extra process is needed to handle them prior to or after component insertion. This makes the assembly process more complicated and increases the cost of manufacturing. In some cases mechanical catches or latches cannot be applied because it is very difficult or even impossible to make them, and mechanical interference can lead to deformation of the housing, and thereby to the formation of cracks in the housing and/or the components.

From GB 2 127 628 a connector housing is known having a contact cavity extending between forward and rearward faces and which is provided at the rear face with an annular resilient gasket surrounding the cavity. From EP 0 255 582 an angle-measuring device is known, which converts rotary movements into electrical signals. For this purpose, a rotating disk with a material measure which is optoelectrically scanned is attached to a shaft.

It is an object of the present invention to provide an electrical module in which components are tightly fitted inside a housing after insertion of the components into the housing, wherein the differences in the dimensions of the components and that of the housing due to variations in the respective manufacturing processes are securely compensated for, and the assembly process is simplified so that the overall manufacturing costs are reduced.

Accordig to the present invention this object is achieved by an electrical module as defined in claim 1.

The resiliently compressible protrusion allows to tightly and snugly fit the component within the recess of the housing after locking the component by the first and second locking members without the use of any additional adhesive, glue, clip, plug or another attachment means or method. The arrangement and the design of the compressible protrusion enable to accommodate the dimensional tolerance of the component and the recess during assembly, resulting in that the protrusion is able to consistently maintain the component in a tight fit within the housing. The resilience of the compressible protrusion enables a sufficient flexibility such that the compressible protrusion can be compressed to collapse to accommodate the slack due to the effect of tolerance.

If the compressible protrusion is resiliently compressed into its compressed state, it will be surface forced and deformed. Therefore, in a preferred embodiment the height of the protrusion is such that it is still compressed in the case of a tolerance where there is a maximum gap between the component and the closed end of the recess of the housing, i.e. the height of the compressible protrusion is larger than the maximum gap formed between the closed end of the recess and the electrical component in the locking position of the electrical component. On the other hand, it is preferable that the protrusion is designed with regard to its compressibility such that in the case of minimum gap it can be compressed to a minimum height being equal to the width of the gap. In this latter case, the protrusion is fully compressed. Practically, a small gap is desirous to accommodate the compressed protrusion and, therefore, the length of the recess and that of the electrical component with the respective tolerance ranges should be dimensioned accordingly.

By forming the resiliently compressible protrusion between the electrical component and the closed end of the recess of the housing, the differences in dimensions of the component and the recess of the housing due to variations in fabrication are securely compensated for, so that an exact and consistent positioning and locking of the component in the housing of the electrical module is achieved.

According to a preferred embodiment of the present invention, the compressible protrusion is integrally formed on the closed end of the recess facing the electrical component. This allows for a simple production of the housing together with the compressible protrusion with low manufacturing costs. Furthermore, by integrally forming the compressible protrusion at the closed end of the recess, the protrusion has an exactly predetermined position in relation to the bottom end of the electrical component facing the closed end of the recess so that inaccuracies in positioning the compressible protrusion by separately attaching the protrusion to the closed end of the recess are avoided. In this embodiment the housing and the compressible protrusion can be formed from the same material, and a variety of standard components can be accommodated and locked in the recess of the housing.

According to an alternative embodiment of the invention, the compressible protrusion is integrally formed on the bottom end of the electrical component facing the closed end of the recess.

According to a preferred embodiment of the invention, the compressible protrusion is formed in a tapered shape or as a semicircular dome in order to facilitate the collapsing effect and to ensure that there is adequate space to accommodate the collapsing material. More generally, the compressible protrusion is shaped such that it has a smaller dimension at its end facing to the bottom end of the component and being engaged in surface contact with the component. This facilitates the compression of the protrusion so that the inserting and locking operation of the component into the recess can be easily performed with low force using the resilience characteristic of the protrusion material.

Alternatively, the compressible protrusion can be formed in a linearly elongated shape, such as, for example, a rib formed on the closed end of the recess. In this case, when inserting the component into the recess of the housing, the bottom end surface of the component is contacted by the linearly elongated compressible protrusion so that a uniform abutting of the component against the protrusion is ensured and the pressure acting on the bottom end of the component is uniformly distributed.

According to a preferred embodiment of the invention, the two compressible protrusions are provided side by side on the closed end of the recess. In this case, it is achieved that the bottom end of the component is uniformly aligned to the closed end of the recess of the housing to consistently maintain the component in a tight fit. The two compressible protrusions ensure that the component is properly seated.

Preferably, the housing and the compressible protrusion formed on the closed end of the recess of the housing are made of a softer material than that of the electrical component so that the compressible protrusion is reliably compressed into its compressed state. In this way it is ensured that the compressible protrusion made from softer material can collapse against the harder material of the electrical component. Therefore, deviations in the locking position of the electrical component are avoided which could otherwise occur due to deformations of the bottom end portion of the component which presses against the compressible protrusion. Alternatively, if the electrical component has the compressible protrusions then the housing should be made from a harder material than that of the protrusions and the electrical component.

To achieve proper deformation characteristics, the compressible protrusion can be made of plastic or a malleable metal. Such materials are soft in nature and sufficiently meet the requirements regarding compression characteristics of the protrusion.

In a preferred embodiment of the present invention, the two recesses are provided above each other in the housing, and the two electrical components are accommodated within the respective recesses. Such an arrangement can be used, for example, for an optical encoder module comprising an optical emitter and an optical detector, wherein the emitter and the detector are accommodated in the respective recesses, and are thereby arranged relative to each other in a spaced apart and exactly aligned relationship. Since the closed ends of the recesses for accommodating the electrical emitter and detector components each have a compressible protrusion, an exact positioning and locking of the components within the recesses is ensured resulting in that the emitter and the detector are exactly positioned relative to each other within the housing.

The invention is further described by way of a preferred embodiment with reference to the drawings.
Figure 1 is a schematic cross-sectional view of an optical encoder module according to a preferred embodiment of the present invention, shown in a state before locking the electrical components.
Figure 2 is a perspective cross-sectional view of the optical encoder module of Figure 1.
Figure 3 is a schematic cross-sectional view of the optical encoder module of Figure 1, wherein the electrical components are in their respective locking positions.
Figures 4 and 5 are perspective cross-sectional views of the optical encoder module of Figure 3, and
Figure 6 shows a schematic plan view of an electrical component according to a further preferred embodiment of the invention.

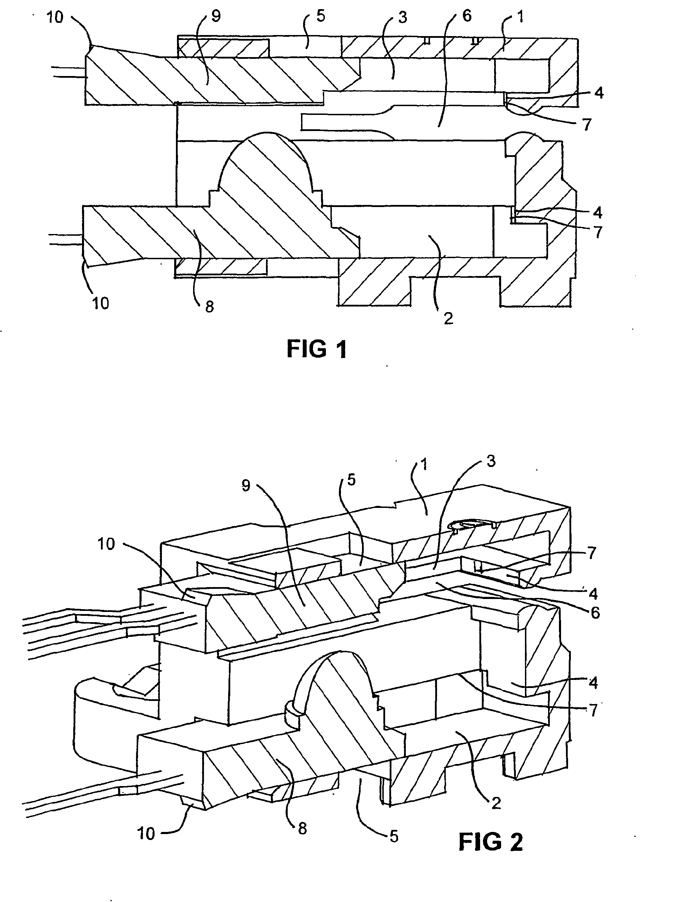

As shown in Figures 1 to 5, an optical encoder module according to a preferred embodiment of the present invention comprises a housing 1 which is integrally made of a plastic material and comprises two recesses 2, 3 arranged one above the other. Each recess 2, 3 has an open end and closed end opposite to the open end, the closed end being formed by a boundary wall 4. The recesses 2 and 3 have a substantially rectangular cross-sectional shape. Two locking openings 5 are formed in opposite sides of the housing 1 in overlapping relationship with the corresponding recesses 2, 3. A gap 6 is formed in the housing 1 between the recesses 2, 3 such that it is open to one end of the housing 1 being adjacent to the closed end of the recesses 2, 3. Each recess 2, 3 is provided with two resilient compressible protrusions 7 protruding into the recesses 2,3, being integrally formed with the housing 1, and arranged spaced apart from each other on the boundary wall 4 of the recesses 2, 3. The resilient compressible protrusions 7 have a linearly elongated shape extending in a vertical direction. An encapsulated optical emitter 8 is accommodated within the one recess 2, and an encapsulated optical detector 9 is accommodated within the other recess 3. The encapsulation of the emitter 8 and that of the detector 9 have each a locking projection 10 for engaging with the respective locking openings 5 to lock the emitter 8 and the detector 9 into a locking position in the respective recesses 2, 3. The encapsulation of the emitter 8 and the detector 9 is made of a material which is harder than the plastic material of the compressible protrusion 7 integrally formed with the housing 1.

Next, the locking operation of the emitter 8 and the detector 9 into the recesses 2, 3 is described.

Figures 1 and 2 show the optical encoder module in a state before locking the emitter 8 and the detector 9. The emitter 8 and the detector 9 are inserted into the recesses 2, 3 of the housing 1 from the open end of the recesses 2, 3 in a direction toward the boundary wall 4 of the recesses 2, 3 until the compressible protrusions 7 formed at the boundary wall 4 are reached. Then, the bottom end of the emitter 8 and the detector 9 is pressed against the compressible protrusions 7 until the locking projection 10 of the emitter 8 and the detector 9 is engaged with the corresponding locking opening 5 in the housing 1.

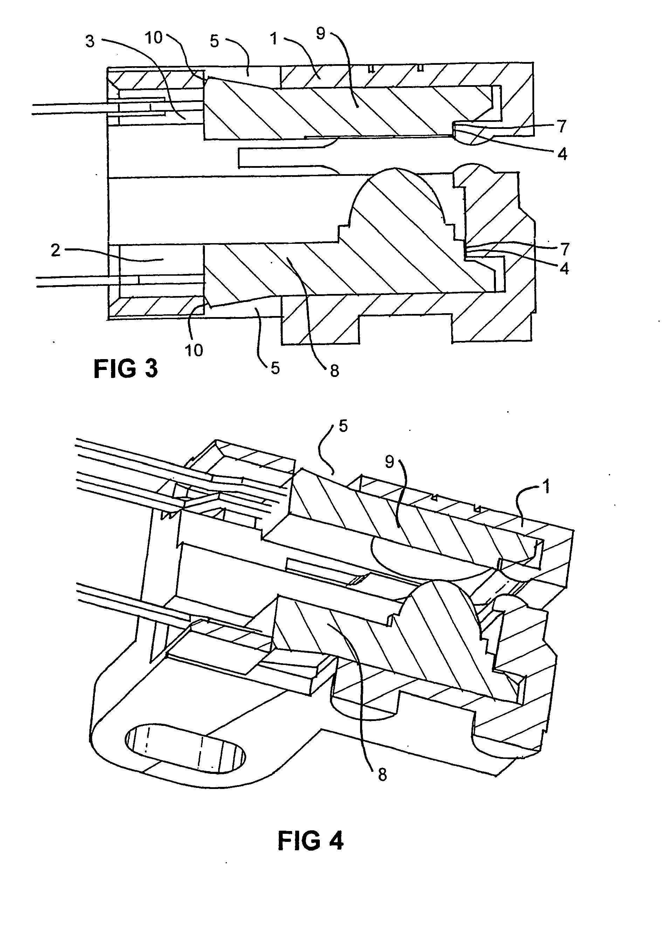

Figures 3 to 5 show the optical encoder module in a locking position of the emitter 8 and the detector 9. In this position, the emitter 8 and the detector 9 are completely locked in the recesses 2, 3 by engaging the locking projections 10 in a barb-like fashion with the locking openings 5 of the housing 1. The compressible protrusion 7 is resiliently compressed into its compressed state between the bottom end of the emitter 8 and the detector 9, respectively, and the corresponding boundary wall 4 of the recesses 2, 3. Therefore, the emitter 8 and the detector 9 are tightly fitted in their locking position and accurately aligned to each other.

The emitter 8 and the detector 9 are spaced and aligned to each other such that a code card or wheel (not shown) drawn or rotated, respectively, through the gap 6 between the emitter 8 and the detector 9 can be detected and read by the optical encoder module. The light emitted by the emitter 8 is passed through or blocked by the code card (or code wheel) and then detected by the detector 9. Since the emitter 8 and the detector 9 are exactly aligned to each other, i.e. the emitter 8 and the detector 9 are arranged in an accurate overlapping position, a reliable operation of the optical encoder module is ensured.

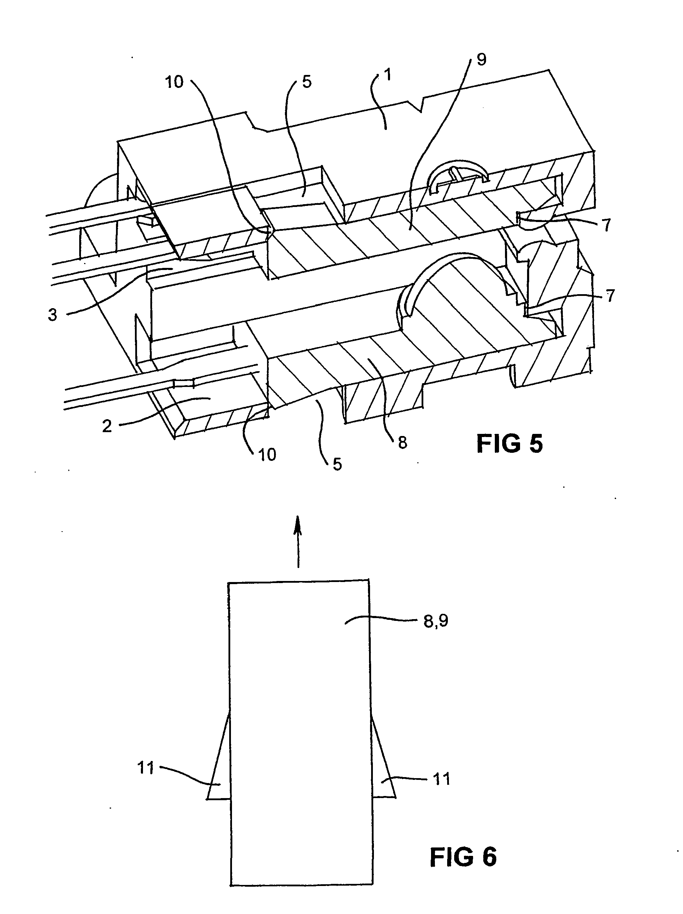

As schematically shown in Figure 6, according to a further preferred embodiment of the invention, the encapsulation of the electrical components (the emitter 8 and the detector 9) is further provided with two elongated triangle-shaped protrusions 11 on their opposite lateral sides. These protrusions 11 provide for a centering of the electrical components in the recesses 2, 3 in lateral directions when the electrical components are inserted in the respective recesses 2, 3, and thereby contribute to an even more accurate alignment of the electrical components.

## Claims

1. An electrical module comprising a housing (1) which includes:
a first recess (2) having an open end and an opposite closed end;
a first electrical component (8) to be accommodated within the first recess (2);
a first locking member (10) formed on the first electrical component (8);
a second locking member (5) formed in the housing (1) such that the first and
second locking members (10, 5) are engaged with each other for locking the first electrical component (8), when inserted into said first recess (2), into a locking position, wherein
a first resiliently compressible protrusion (7) is provided between the first electrical component (8) and the closed end of the first recess (2) so as to be resiliently compressed therebetween into its compressed state when the first electrical component (8) is inserted into the first recess (2) and locked therein in its locking position;
a second recess (3) having an open end and an opposite closed end;
a second electrical component (9) to be accommodated within the second recess (3);
a third locking member (10) formed on the second electrical component (9); and
a fourth locking member (5) formed in the housing (1) such that the third and
fourth locking members (10, 5) are engaged with each other for locking the second electrical component (9), when inserted into said second recess (3), into a locking position, wherein
a second resiliently compressible protrusion (7) is provided between the second electrical component (9) and the closed end of the second recess (3) so as to be resiliently compressed therebetween into its compressed state when the second electrical component (9) is inserted into the second recess (3) and locked therein in its locking position, and
wherein
a gap (6) is formed in the housing (1) between the first recess (2) and the second recess (3), the gap being open to an end of the housing (1) being adjacent to the closed ends of the first and second recesses (2, 3).

2. The electrical module according to claim 1, wherein
the first compressible protrusion (7) is integrally formed at the closed end of the first recess (2) facing the first electrical component (8), and/or
the second compressible protrusion (7) is integrally formed at the closed end of the second recess (3) facing the second electrical component (9).

3. The electrical module according to claim 1, wherein
the first compressible protrusion (7) is integrally formed on a bottom end of the first electrical component (8) facing the closed end of the first recess (2), and/or the second compressible protrusion (7) is integrally formed on a bottom end of the second electrical component (9) facing the closed end of the second recess (3).

4. The electrical module according to claim 2 or 3, wherein the first and/or the second compressible protrusion (7) is formed in a tapered shape or in the form of a semicircular dome.

5. The electrical module according to claim 2 or 3, wherein the first and/or the second compressible protrusion (7) is formed in a linearly elongated shape.

6. The electrical module according to claim 1, wherein the first and the second compressible protrusions (7) are provided side by side.

7. The electrical module according to claim 2, wherein
the housing (1) and the first compressible protrusion (7) are made of a softer material than that of the first electrical component (8), and/or
the housing (1) and the second compressible protrusion (7) are made of a softer material than that of the second electrical component (9).

8. The electrical module according to claim 7, wherein the first and/or second compressible protrusion (7) is made of plastic or a malleable metal.

9. The electrical module according to claim 1, wherein the first and the second recesses (2, 3) are provided one above the other in the housing (1), and an electrical component (8, 9) is accommodated within each recess (2, 3).

## Patentansprüche

1. Ein elektrisches Modul aufweisend ein Gehäuse (1) welches umfasst:
eine erste Aussparung (2) mit einem offenen Ende und einem gegenüberliegenden geschlossenen Ende;
ein erstes elektrisches Bauteil (8), welches in der ersten Aussparung (2) aufgenommen ist;
ein erstes Verriegelungselement (10), welches auf dem ersten elektrischen Bauteil (8) ausgebildet ist;
ein zweites Verriegelungselement (5), welches in dem Gehäuse (1) ausgebildet ist, so dass das erste und das zweite Verriegelungselement (10, 5) ineinander eingreifen um das erste elektrische Bauteil (8) in einer Verriegelungsposition zu verriegeln, wenn es in die erste Aussparung (2) eingebracht ist, wobei
ein erster elastisch komprimierbarer Vorsprung (7) zwischen dem ersten elektrischen Bauteil (8) und dem geschlossenen Ende der ersten Aussparung (2) vorgesehen ist um dazwischen elastisch in seinen komprimierten Zustand komprimiert zu werden wenn das erste elektrische Bauteil (8) in die erste Aussparung (2) eingeführt wird und darin in seiner Verriegelungsposition verriegelt wird;
eine zweite Aussparung (3) mit einem offenen Ende und einem gegenüberliegenden geschlossenen Ende;
ein zweites elektrisches Bauteil (9), welches in der zweiten Aussparung (3) aufgenommen ist;
ein drittes Verriegelungselement (10), welches auf dem zweiten elektrischen Bauteil (9) ausgebildet ist; und
ein viertes Verriegelungselement (5), welches in dem Gehäuse (1) ausgebildet ist, so dass das dritte und das vierte Verriegelungselement (10, 5) ineinander eingreifen um das zweite elektrische Bauteil (9) in einer Verriegelungsposition zu verriegeln, wenn es in die zweite Aussparung (3) eingebracht ist, wobei
ein zweiter elastisch komprimierbarer Vorsprung (7) zwischen dem zweiten elektrischen Bauteil (8) und dem geschlossenen Ende der zweiten Aussparung (3) vorgesehen ist um dazwischen elastisch in seinen komprimierten Zustand komprimiert zu werden wenn das zweite elektrische Bauteil (9) in die zweite Aussparung (3) eingeführt wird und darin in seiner Verriegelungsposition verriegelt wird und
wobei ein Ausschnitt (6) in dem Gehäuse (1) zwischen der ersten Aussparung (2) und der zweiten Aussparung (3) ausgebildet ist, wobei der Ausschnitt (6) zu einem Ende des Gehäuses (1) offen ist, welches benachbart zu den geschlossenen Enden der ersten und der zweiten Aussparung (2, 3) ist.

2. Das elektrisches Modul gemäß Anspruch 1, wobei
der erste elastisch komprimierbare Vorsprung (7) einstückig ausgebildet ist an dem geschlossenen Ende der ersten Aussparung (2), welches dem ersten elektrischen Bauteil zugewandt ist, und/oder
der zweite elastisch komprimierbare Vorsprung (7) einstückig ausgebildet ist an dem geschlossenen Ende der zweiten Aussparung (3), welches dem ersten elektrischen Bauteil zugewandt ist.

3. Das elektrisches Modul gemäß Anspruch 1, wobei
der erste elastisch komprimierbare Vorsprung (7) einstückig ausgebildet ist auf einem unteren Ende des ersten elektrischen Bauteils (8), welches dem geschlossenen Ende der ersten Aussparung (2) zugewandt ist, und/oder
der zweite elastisch komprimierbare Vorsprung (7) einstückig ausgebildet ist auf einem unteren Ende des zweiten elektrischen Bauteils (8), welches dem geschlossenen Ende der zweiten Aussparung (3) zugewandt ist.

4. Das elektrisches Modul gemäß Anspruch 2 oder 3, wobei
der erste und/oder der zweite komprimierbare Vorsprung (7) ausgebildet ist in einer kegelförmigen Form oder in Form einer halbkreisförmiger Haube.

5. Das elektrisches Modul gemäß Anspruch 2 oder 3, wobei
der erste und/oder der zweite komprimierbare Vorsprung (7) ausgebildet ist in einer geradlinig gestreckten Form.

6. Das elektrisches Modul gemäß Anspruch 1, wobei
der erste und/oder der zweite komprimierbare Vorsprung (7) nebeneinander bereitgestellt sind.

7. Das elektrisches Modul gemäß Anspruch 1, wobei
das Gehäuse (1) und der erste komprimierbare Vorsprung (7) aus einem Material hergestellt sind, welches weicher ist als das Material des ersten elektrischen Bauteils (8) und/oder
das Gehäuse (1) und der zweite komprimierbare Vorsprung (7) aus einem Material hergestellt sind, welches weicher ist als das Material des zweiten elektrischen Bauteils (9).

8. Das elektrisches Modul gemäß Anspruch 7, wobei
der erste und/oder der zweite komprimierbare Vorsprung (7) aus Kunststoff oder einem plastischen Metall hergestellt sind.

9. Das elektrisches Modul gemäß Anspruch 1, wobei
die erste und die zweite Aussparung (2, 3) eine über der anderen in dem Gehäuse (1) vorgesehen sind, und ein elektrisches Bauteil (8, 9) in jeder Aussparung (2, 3) aufgenommen ist.

## Revendications

1. Module électrique comprenant un logement (1) qui inclut :
un premier évidement (2) doté d'une extrémité ouverte et d'une extrémité fermée opposée ;
un premier composant électrique (8) à recevoir dans le premier évidement (2) ; un premier élément (10) de blocage formé sur le premier composant
électrique (8) ;
un deuxième élément (5) de blocage formé dans le logement (1) de telle sorte que les premier et deuxième éléments (10, 5) de blocage entrent en prise l'un avec l'autre pour bloquer le premier composant électrique (8), lorsqu'il est introduit dans ledit premier évidement (2), en position de blocage, dans lequel une première protubérance élastiquement compressible (7) se situe entre le premier composant électrique (8) et l'extrémité fermée du premier
évidement (2) afin d'être comprimée de façon élastique entre ceux-ci dans son état comprimé lorsque le premier composant électrique (8) est introduit dans le premier évidement (2) et bloqué à l'intérieur de celui-ci dans sa position de blocage ;
un deuxième évidement (3) doté d'une extrémité ouverte et d'une extrémité fermée opposée ;
un deuxième composant électrique (9) à recevoir dans le deuxième
évidement (3) ;
un troisième élément (10) de blocage formé sur le deuxième composant électrique (9) ;
un quatrième élément (5) de blocage formé dans le logement (1) de telle sorte que les troisième et quatrième éléments (10, 5) de blocage entrent en prise l'un avec l'autre pour bloquer le deuxième composant électrique (9), lorsqu'il est introduit dans ledit deuxième évidement (3), en position de blocage, dans lequel une deuxième protubérance élastiquement compressible (7) se situe entre le deuxième composant électrique (9) et l'extrémité fermée du deuxième évidement (3) afin d'être comprimée de façon élastique entre ceux-ci dans son état comprimé lorsque le deuxième composant électrique (9) est introduit dans le deuxième évidement (3) et bloqué à l'intérieur de celui-ci dans sa position de blocage, et
dans lequel
un espace (6) est formé dans le logement (1) entre le premier évidement (2) et
le deuxième évidement (3), l'espace étant ouvert à une extrémité du
logement (1) étant adjacente aux extrémités fermées des premier et deuxième évidements (2, 3).

2. Module électrique selon la revendication 1, dans lequel
la première protubérance compressible (7) est formée entièrement à l'extrémité fermée du premier évidement (2) faisant face au premier composant
électrique (8), et/ou
la deuxième protubérance compressible (7) est formée entièrement à l'extrémité fermée du deuxième évidement (3) faisant face au deuxième composant électrique (9).

3. Module électrique selon la revendication 1, dans lequel
la première protubérance compressible (7) est formée entièrement sur une extrémité inférieure du premier composant électrique (8) faisant face à l'extrémité fermée du premier évidement (2), et/ou
la deuxième protubérance compressible (7) est formée entièrement sur une extrémité inférieure du deuxième composant électrique (9) faisant face à l'extrémité fermée du deuxième évidement (3).

4. Module électrique selon la revendication 2 ou 3, dans lequel la première et/ou la deuxième protubérance compressible (7) possède une forme conique ou se présente sous la forme d'un dôme semi-circulaire.

5. Module électrique selon la revendication 2 ou 3, dans lequel la première et/ou la deuxième protubérance compressible (7) possède une forme allongée de façon linéaire.

6. Module électrique selon la revendication 1, dans lequel les première et deuxième protubérances compressibles (7) se situent côte à côte.

7. Module électrique selon la revendication 2, dans lequel
le logement (1) et la première protubérance compressible (7) sont composés d'un matériau plus mou que celui du premier composant électrique (8), et/ou
le logement (1) et la deuxième protubérance compressible (7) sont composés d'un matériau plus mou que celui du deuxième composant électrique (9).

8. Module électrique selon la revendication 7, dans lequel la première et/ou la deuxième protubérance compressible (7) est composée de plastique ou d'un métal malléable.

9. Module électrique selon la revendication 1, dans lequel les premier et deuxième évidements (2, 3) se situent l'un au-dessus de l'autre dans le logement (1), et un composant électrique (8, 9) est reçu dans chaque évidement (2, 3).
